# EUROPEAN PATENT APPLICATION

(11) **EP 1 699 000 A1**
(43) Date of publication of application: **06.09.2006**
(21) Application number: 04807674.9
(22) Date of filing: 24.12.2004
(51) Int. Cl.: G06K 19/00, B07C 5/344

(54) **ELECTRONIC CIRCUIT BOARD INTERMEDIATE MEMBER, MANUFACTURING METHOD THEREFOR, MANUFACTURING EQUIPMENT THEREFOR, METHOD FOR MANUFACTURING NONCONTACT ID CARD AND THE LIKE, AND EQUIPMENT THEREFOR**

(30) Priority: 26.12.2003 JP 2003433502
(71) Applicant: TORAY ENGINEERING CO., LTD., Osaka-shi, Osaka 530-8222 (JP)
(72) Inventor: Akita, Masanori, Toray Engineering Co., Ltd., Otsu-shi Shiga 5202141 (JP); Sawaki, Yoshiki, Toray Engineering Co., Ltd., Otsu-shi Shiga 5202141 (JP)
(74) Representative: Goddar, Heinz J.
(86) International application number: PCT/JP2004/019317
(87) International publication number: WO 2005/073902

(57) **Abstract**

Adverse affects due to a failure interposer board and a blank section are prevented from occurrence by arranging only conforming interposer boards (1) on a carrier tape (2) at every predetermined interval.

## Description

### Specification

Electronic Circuit Board Intermediate Member, Manufacturing Method Thereof, Manufacturing Apparatus Thereof, Method for Manufacturing Non-Contact ID Card and The Like, and Apparatus Thereof

### Technical Field

The present invention relates to an electronic circuit board intermediate member, manufacturing method thereof, manufacturing apparatus thereof, method for manufacturing non-contact ID card and the like, and apparatus thereof, suitably applied to a method for manufacturing non-contact ID (Identification Data) card and the like.

### Background Art

From the past, as a so-called non-contact ID card, non-contact tag, and the like (hereinafter, generically referred to as non-contact ID card and the like) in which an IC chip is mounted on an antenna circuit board, those disclosed in International Publication No. WO01/062517, are known.

The non-contact ID card and the like is consisted of an antenna circuit board in which an antenna is formed on a base member, and an interposer board in which extended electrodes are formed on the base member, an IC chip being embedded in a base member, and each extended electrode being connected to corresponding electrode of the IC chip, wherein both base members are laminated so as to join each of the electrodes of the antenna with corresponding one of the extended electrodes.

As a method for manufacturing such non-contact ID card and the like, a method comprising an electrode forming step and a base member laminating step is known, as is disclosed in International Publication No. WO01/062517, the electrode forming step forming extended electrodes on a base member of an interposer board, an IC chip being embedded in the interposer board, each of the extended electrode being connected to corresponding electrode of the IC chip, the base member laminating step laminating both base members so as to join each electrode of an antenna formed on the base member of an antenna circuit board with corresponding one of the extended electrodes.

An apparatus comprising a raw material for antenna circuit board wind off device, an antenna circuit printing device, an oven, a raw material for interposer board wind off device, a press-cut device, a residual raw material reel off device, an interposer board provisional adhesion device, an interposer board transfer device, an interposer board adhesion device, a dryer, and a product reel off device, as is illustrated in Fig. 14 of International Publication No. WO01/062517.

### Disclosure of the Invention

### Problems to be Solved by the Invention

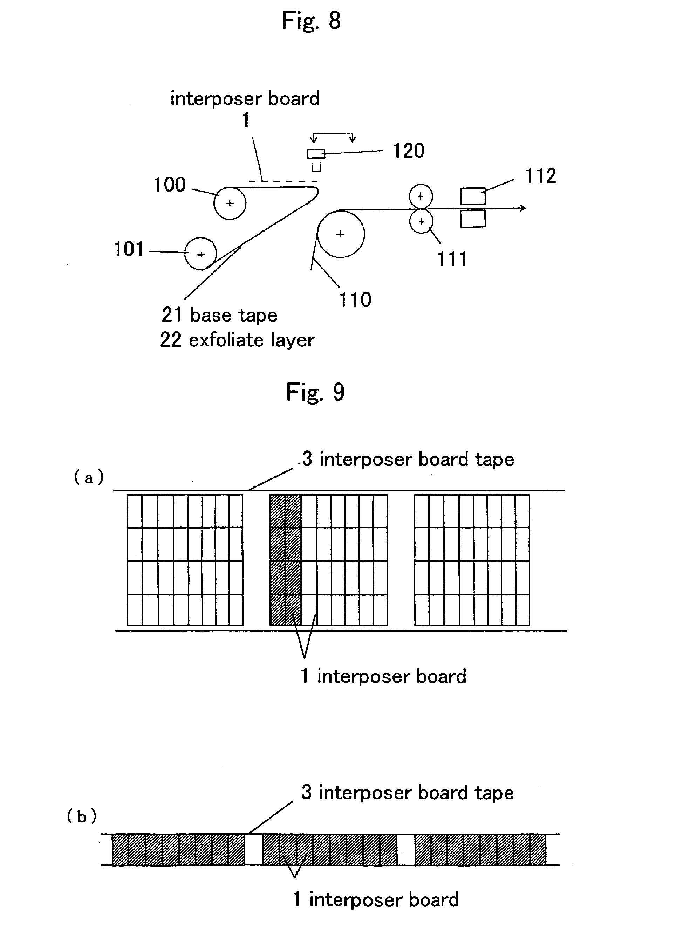

An interposer board is mass produced generally using thick film technique (such as coating technique, printing technique, etc.), thin film technique (such as deposition technique, sputtering technique, etc.), etc., the interposer board being produced by forming extended electrodes on a base member, an IC chip being mounted on the base member, each of the extended electrodes being connected to corresponding electrode of the IC chip. That is, a plurality of interposer board is formed on an interposer board tape. An example of the interposer board tape is illustrated in Fig. 9.

However, a failure interposer board is generally on an interposer board tape, or a blank section (space section) in which no interposer board is formed is on an interposer board tape as a matter of convenience of manufacturing process. Process, such as checking whether an interposer board is good item or bad item, acceleration and deceleration, stopping of tape feeding when bad item is detected, discharging of bad item, or discharging of blank section, should be carried out, when an interposer board is directly cut out from an interposer board tape, and laminated with a base member of an antenna circuit board so as to join each antenna electrode of the base member of the antenna circuit board with corresponding extended electrodes of the interposer board. Also, an overall configuration becomes complicated. Further, necessary time becomes longer because excess process is needed.

The present invention was made in view of the above problems.

It is an object of the present invention to offer an electronic circuit board intermediate member, manufacturing method thereof, manufacturing apparatus thereof, method for manufacturing non-contact ID card and the like, and apparatus thereof, which prevent adverse affects due to a failure interposer board and a blank section from occurrence.

### Means for Solving the Problems

An electronic circuit board intermediate member of a first aspect according to the present invention is obtained by disposing good interposer boards on a carrier tape at every predetermined interval, the good interposer board comprising a base member mounting an IC chip, extended electrodes formed on the base member and each connected to corresponding electrode of the IC chip, and an adhesive layer formed to cover the extended electrodes, and the carrier tape being formed an exfoliate layer on one face.

In this electronic circuit board intermediate member, only good interposer boards are disposed on the carrier tape so that there are no failure interposer boards and no blank sections. Therefore, good electronic circuit board final members are obtained with high productivity by taking the interposer boards out with high speed, the interposer boards being aligned at every constant predetermined interval, and by mounting the interposer board thereafter.

The term "good interposer board" means that a good interposer board is selected and cut out from an interposer board tape, or an interposer board is selected and cut out from an interposer board tape excepting blank sections. As a consequence, a failure interposer board may be included due to insufficient checking of good one or failure one, such failure interposer board is included in the good interposer board.

A manufacturing method for manufacturing an electronic circuit board intermediate member of a second aspect according to the present invention comprises a process for applying adhesive on extended electrodes of an interposer board tape, the interposer board tape being obtained by forming the extended electrodes on a base member, a plurality of IC chip being mounted on the base member, and each of the extended electrodes being connected to corresponding electrode of each of the IC chip, a process for obtaining individual interposer boards by cutting the interposer board tape, a process for selecting only good interposer boards, and a process for disposing only the good interposer boards on a carrier tape at every predetermined interval, the carrier tape being obtained by forming an exfoliate layer on one face of a base tape.

When the manufacturing method for manufacturing an electronic circuit board intermediate member is employed, an electronic circuit board intermediate member in which only good interposer boards are disposed, can be manufactured by excluding failure interposer boards and blank sections, further adverse affects due to failure interposer boards and blank sections are prevented from occurrence.

A manufacturing apparatus for manufacturing an electronic circuit board intermediate member of a third aspect according to the present invention comprises first means for applying adhesive on extended electrodes of an interposer board tape, the interposer board tape being obtained by forming the extended electrodes on a base member, a plurality of IC chip being mounted on the base member, and each of the extended electrodes being connected to corresponding electrode of each of the IC chip, second means for obtaining individual interposer boards by cutting the interposer board tape, third means for selecting only good interposer boards, and fourth means for disposing only the interposer boards on a carrier tape at every predetermined interval, the carrier tape being obtained by forming an exfoliate layer on one face of a base tape.

When the manufacturing apparatus for manufacturing an electronic circuit board intermediate member is employed, an electronic circuit board intermediate member in which only good interposer boards are disposed can be manufactured by excluding failure interposer boards and blank sections, further adverse affects due to failure interposer boards and blank sections are prevented from occurrence.

A manufacturing method for manufacturing non-contact ID card and the like of a fourth aspect according to the present invention comprises a process for peeling an interposer board from an electronic circuit board intermediate member, the electronic circuit board intermediate member being obtained by disposing interposer boards on a carrier tape at every predetermined interval, the interposer board being obtained by mounting an IC chip, by forming extended electrodes each connected to corresponding electrode of the IC chip, and by forming an adhesive layer to cover the extended electrodes, the carrier tape being obtained by forming an exfoliate layer on one face of a base tape, and a process for depressing the interposer board to an antenna circuit board tape so as to face antenna electrodes formed on an antenna circuit base material film and the extended electrodes.

When the manufacturing method for manufacturing non-contact ID card and the like is employed, it is sufficient that interposer boards are continuously taken from an electronic circuit board intermediate member, on which good interposer member are mounted. Therefore, processing with high speed can be realized, and a large amount of non-contact ID cards can be manufactured within a short time period.

A manufacturing apparatus for manufacturing non-contact ID card and the like of a fifth aspect according to the present invention comprises means for peeling an interposer board one by one from an electronic circuit board intermediate member, the electronic circuit board intermediate member being obtained by disposing interposer boards on a carrier tape at every predetermined interval, the interposer board being obtained by mounting an IC chip, by forming extended electrodes each connected to corresponding electrode of the IC chip, and by forming an adhesive layer to cover the extended electrodes, the carrier tape being obtained by forming an exfoliate layer on one face of a base tape, and means for depressing the interposer board to an antenna circuit board tape so as to face antenna electrodes formed on an antenna circuit base material film and the extended electrodes.

When the manufacturing apparatus for manufacturing non-contact ID card and the like is employed, it is sufficient that interposer boards are continuously taken from an electronic circuit board intermediate member, on which good interposer member are mounted. Therefore, processing with high speed can be realized, and a large amount of non-contact ID cards can be manufactured within a short time period.

### Effects of the Invention

The first aspect of the present invention has characteristic effects that adverse affects due to a failure interposer board and a blank section are prevented from occurrence because only good interposer boards are disposed on the carrier tape.

The second aspect of the present invention has characteristic effects that an electronic circuit board intermediate member in which only good interposer boards are disposed, can be manufactured, and further adverse affects due to failure interposer boards and blank sections are prevented from occurrence.

The third aspect of the present invention has characteristic effects that an electronic circuit board intermediate member in which only good interposer boards are disposed, can be manufactured, further adverse affects due to failure interposer boards and blank sections are prevented from occurrence.

The fourth aspect of the present invention has characteristic effects that interposer boards are continuously taken from an electronic circuit board intermediate member, on which good interposer member are mounted, the interposer boards are continuously depressed and joined to continuously sent antenna circuit board, processing with high speed can be realized, and a large amount of non-contact ID cards can be manufactured within a short time period.

The fifth aspect of the present invention has characteristic effects that interposer boards are continuously taken from an electronic circuit board intermediate member, on which good interposer member are mounted, the interposer boards are continuously depressed and joined to continuously sent antenna circuit board, processing with high speed can be realized, and a large amount of non-contact ID cards can be manufactured within a short time period.

### Brief Description of the Drawings

Figure 1 is a schematic perspective view illustrating an electronic circuit board intermediate member of an embodiment according to the present invention;
Figure 2 is a schematic cross sectional view illustrating a configuration of an interposer board;
Figure 3 is a schematic cross sectional view of the electronic circuit board intermediate member in Fig. 1;
Figure 4 is a schematic perspective view illustrating a condition where an interposer board is heated and depressed to an antenna circuit board;
Figure 5 is a schematic perspective view illustrating joined condition of an extended electrode and an antenna electrode;
Figure 6 is a schematic diagram illustrating a manufacturing apparatus for manufacturing an electronic circuit board intermediate member of one example;
Figure 7 is a schematic diagram illustrating a transfer processing section of an example;
Figure 8 is a schematic diagram illustrating an apparatus for manufacturing a final product using an electronic circuit board intermediate member of an example; and
Figures 9 are schematic top views of an interposer board tape, (a) illustrates an example in which a plurality of row of interposer boards are formed, while (b) illustrates an example obtained by slitting and cutting only one row from (a).

### Description of References

- 1: interposer board
- 2: carrier tape
- 3: interposer board tape
- 6: discharge nozzle
- 8: cutter
- 9: transfer processing section
- 11: IC chip
- 12: base material
- 13: electrode
- 14: extended electrode
- 15: adhesive
- 21: base tape
- 22: exfoliate layer

### Best Mode for Carrying Out the Invention

Hereinafter, referring to the attached drawings, we explain an electronic circuit board intermediate member, a manufacturing method for manufacturing an electronic circuit board intermediate member, a manufacturing apparatus for manufacturing an electronic circuit board intermediate member, a manufacturing method for manufacturing non-contact ID card and the like, and a manufacturing apparatus for manufacturing non-contact ID card and the like, of embodiments in detail.

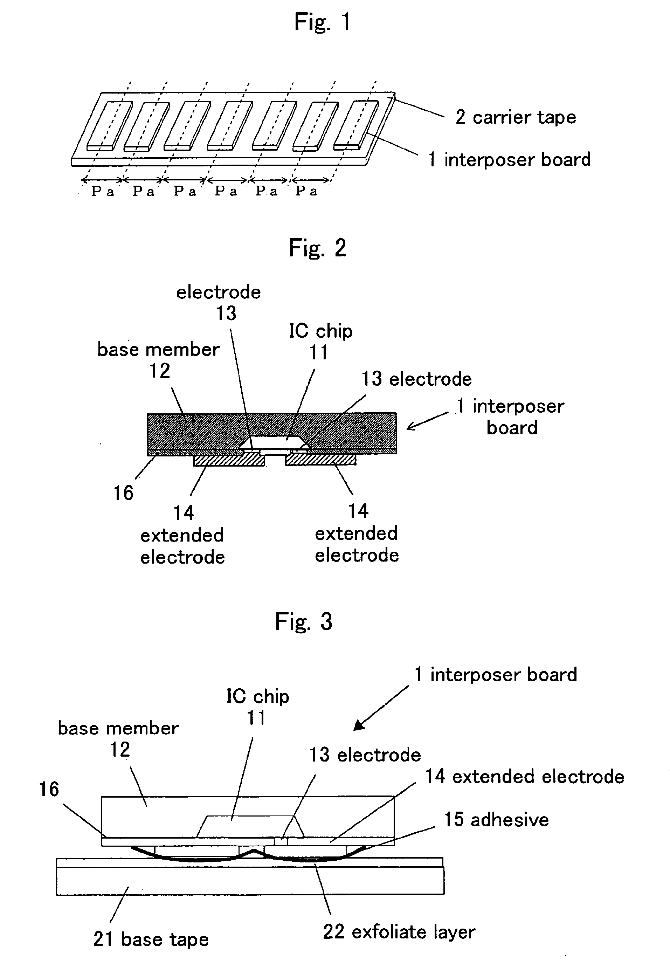

Fig. 1 is a schematic perspective view illustrating an electronic circuit board intermediate member of an embodiment according to the present invention.

This electronic circuit board intermediate member is made by disposing only good interposer members 1 on a carrier tape 2 at every predetermined interval.

The interposer member 1 is made by forming extended electrodes 14 on a base member 12 on which an IC chip 11 is mounted (or embedded), each of the extended electrodes 14 being connected to corresponding electrode 13 of the IC chip 11, as is illustrated in Fig. 2, for example. Reference numeral 16 refers to an insulation layer.

The extended electrode 14 may be formed by a method for printing and drying or printing and heating and curing conductive paste to be an electrode, the conductive paste including conductive particle such as silver, within resin, for example, or by another method for forming a metal thin film such as copper etc. into an electrode. It is preferable in view of manufacturing (low cost) and performance (junction stability is high) that the extended electrode 14 is formed by a further method using conductive paste. It is particularly preferable that extended electrodes are formed by printing and drying or printing and heating and curing conductive paste including conductive particles having particle diameter of 0.1 ~ 100 *µ* m, preferably having particle diameter of 0.5 ~ 50 *µ* m. The reason is that fine concave sections are formed on extended electrode surface so that higher junction stability is realized, as will be described later.

The carrier tape 2 is made by forming an exfoliate layer 22 on one face of a base tape 21, as is illustrated in Fig. 3. It is preferable that the carrier tape 2 is provided feed holes at every predetermined pitch in its outer edge section. The reason is that positioning of the carrier tape 2 can be achieved with cheap equipment, with high speed, and with accuracy.

The IC chip 11 may be mounted on the base member 12. However, the IC chip 11 is preferably embedded in the base member 12. The interposer board 1 having this configuration has no projection due to the IC chip 11, therefore the interposer board 1 can be handled simply such as the interposer board 1 is transferred using roller group, for example, similarly to a general film or web. When the IC chip 11 is mounted on the base member 12 in a projection manner, the roller group may be formed a step so that the IC chip 11 never contact with the roller group during transferring.

When an electronic circuit board final product, such as a non-contact ID, is obtained using the electronic circuit board intermediate member having the above configuration, partial section of an interposer board is peeled first from a carrier tape 2 by folding the carrier tape 2 back rapidly, for example.

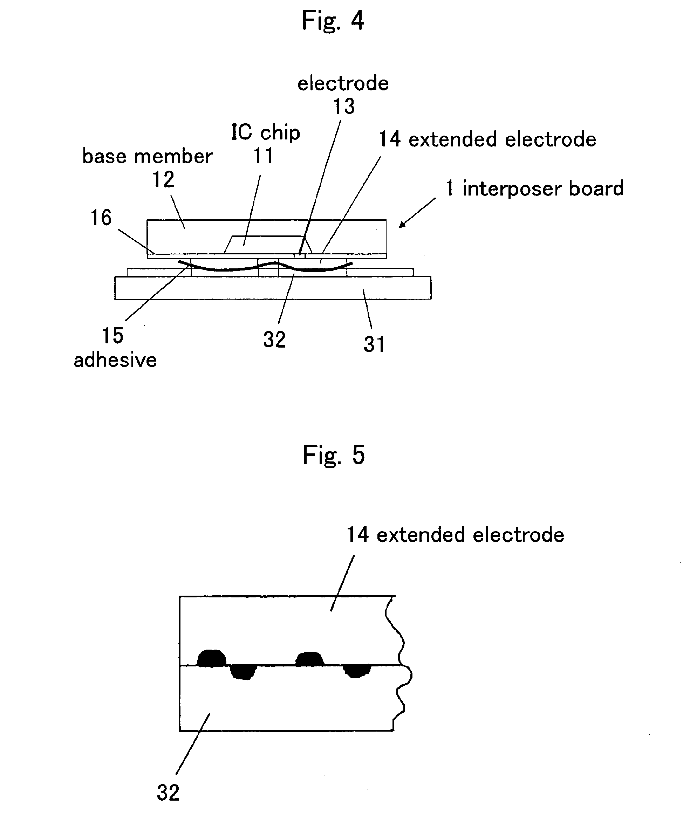

Next, the interposer board 1 is exfoliated from the carrier tape 2, then the interposer board 1 is depressed to an antenna circuit board tape 3 so as to face antenna electrodes 32 formed on an antenna circuit base member film 31 and the extended electrodes 14, as is illustrated in Fig. 4.

By this depressing, adhesive intrudes into fine concave sections of the extended electrode 14 and the antenna electrode 32 so as to achieve connection between both electrodes, while the extended electrode 14 and the antenna electrode 32 contact to one another in portions other than the concave sections, so as to achieve electric connection between both electrodes (refer to Fig. 5).

When heating is used together with the adhesive during the depressing, the adhesive is sufficiently filled within fine concave sections of the extended electrode so as to increase junction force, decrease junction resistance, and improve junction stability. Or more specifically, when the extended electrode section of the interposer board is heated and depressed during the mounting of the interposer board on the carrier tape, the adhesive is similarly filled within fine concave sections of the extended electrode, so that it works on improvement in junction force, decrease in junction resistance, and stabilization in junction when the interposer board is mounted later on the antenna electrodes of the antenna circuit board.

As is understood from the foregoing, only good interposer boards 1 are disposed on the carrier tape 2 at every predetermined interval. Therefore, checking whether the interposer board 1 is good or failure, and process, such as acceleration and deceleration in tape transfer, stopping operation, discharging of a failure interposer board, or discharging of a blank section, when a failure interposer board is detected, are unnecessary. As a result, arrangement for carrying out above series of process can be simplified, and overall required time can be shortened.

Then, a manufacturing method for manufacturing an electronic circuit board intermediate member and a manufacturing apparatus thereof are described in detail.

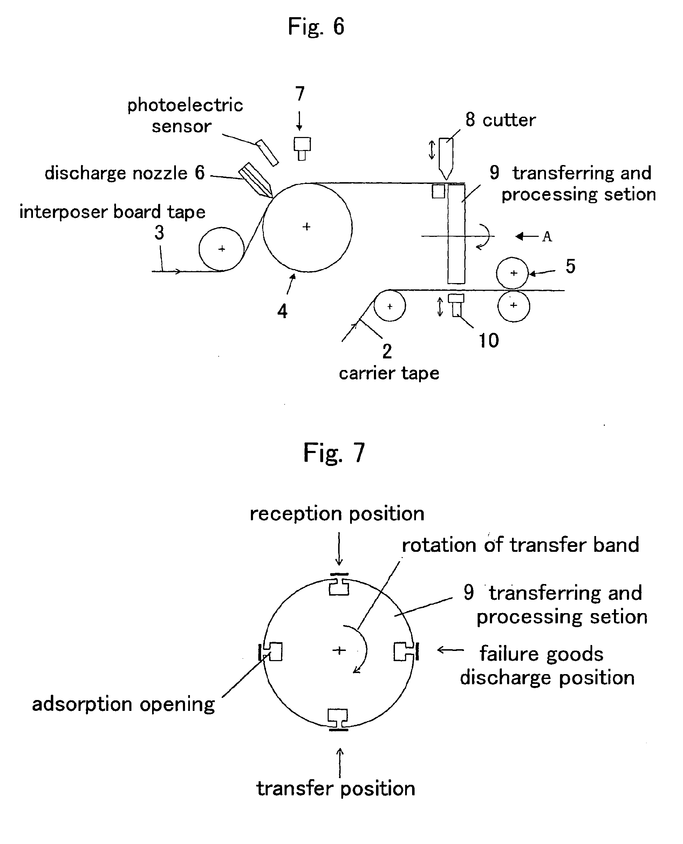

Fig. 6 is a schematic view illustrating a manufacturing apparatus for manufacturing an electronic circuit board intermediate member of an embodiment.

The apparatus comprises a first transfer mechanism 4 for transferring an interposer board tape 3 manufactured in previous process (not illustrated), a second transfer mechanism 5 for transferring a carrier tape 2, a discharge nozzle 6 for applying adhesive on the interposer board tape 3 under transferring, an identification mark recognizing section 7 for recognizing an identification mark formed at predetermined location of the interposer board tape 3, the identification mark being indicative of good interposer board 1 or failure interposer board 1, a cutter 8 for cutting the interposer board tape 3 so as to obtain an individual interposer board tape 3, a transferring and processing section 9 for transferring and processing the individual interposer board tape 3, and an elevation stage 10 for supporting the carrier tape 2 when receiving the interposer board tape 3.

The first transfer mechanism 4 is a servo driven tape sending roller which adsorbs the tape and applies sending force to the tape, for example.

The discharge nozzle 6 discharges adhesive towards the interposer board tape 3 under transferring so as to form adhesive layer of predetermined thickness. The adhesive may be insulating adhesive, or may be conductive adhesive. The insulating adhesive is not limited to adhesive having insulation properties and adhesion properties, contains so called insulating adhesive having self-bonding properties in addition to insulation properties. it is preferable that the insulating adhesive has self-bonding properties under cooled condition. As the representative example, hot-melt adhesive of EVA series, polyolefin series, synthetic rubber series, adhesive polymer series, urethane series reaction system etc can be exemplified. The hot-melt adhesive has characteristics such that the adhesive is easily spread to form a thin layer by heating and pressurizing. The synthetic rubber series hot-melt adhesive among them is the most preferable because it has characteristics such that the adhesive is easily spread to form a thinner layer even when low pressurizing force is applied.

It is preferable that insulating adhesive used for self-bonding junction has expanding thinner and spreading with small pressure and with short time characteristics. The relationship between tensile strength and stretch of the insulating adhesive is therefore important. The tensile strength is equal to or less than 3 MPa, and is preferably equal to or less than 1 MPa, while the stretch is equal to or greater than 300 %, and is preferably equal to or greater than 500 %.

A photoelectric sensor and a CCD camera are exemplified as the identification mark recognizing section 7, for example.

The transferring and processing section 9 is a rotor which rotates in one direction within a plane orthogonal to the transfer direction of the interposer board tape 3. The transferring and processing section 9 can suck the interposer board tape 3. A position facing the interposer board tape 3 is set to be a reception position, a position facing the carrier tape 2 is set to be a transfer position, a predetermined position between the reception position and the transfer position is set to be a failure goods discharge position.

In the above example, the transferring and processing section 9 is illustrated to be orthogonal to the transfer direction of the interposer board tape 3. However, the transferring and processing section 9 may be aligned with respect to the transfer direction of the interposer board tape 3.

Operation and effect of the manufacturing apparatus for manufacturing an electronic circuit board intermediate member having the above arrangement are as follows. However, in prior process, an interposer board is judged whether it is good or failure by contacting checking probes to extended electrodes, and by carrying out test (function test etc) of the interposer board, then a failure good identification mark is formed at predetermined location with respect to the interposer board which is judged to be failure one. Specifically, a black round mark is applied near the extended electrode using a transfer pin, for example.

The interposer board tape 3 which has been finished the test of each interposer board, and has been formed the failure good identification mark, if required, as above, is pitch fed by a predetermined distance by the first transfer mechanism 4, and condition of a place where the failure good identification mark is to be formed, is recognized by the identification mark recognizing section 7. By this operation, the interposer board is recognized to be good or failure.

When the interposer board is recognized to be good, the transferring and processing section 9 receives the interposer board at the reception position, and transfers the interposer board at the transfer position.

On the contrary, when the interposer board is recognized to be failure, the transferring and processing section 9 receives the interposer board at the reception position, and discharges the interposer board at the failure goods discharge position.

The carrier tape 2 is transferred by the second transfer mechanism 5 only when the interposer board is transferred, so that the interposer boards 1 are disposed on the carrier tape 2 at every predetermined interval.

It is preferable that the interposer board 1 is heated or is heated and depressed so that the insulating adhesive on the extended electrodes is easily flatting, when the interposer board 1 is disposed on the carrier tape 2 or after the disposition of the interposer board 1 on the carrier tape 2.

Though the blank section is previously known its existence interval, and its continuing length, it is realized that no blank sections are formed on the carrier tape 2, by controlling the transfer operation of the first transfer mechanism 4, the transfer operation of the second transfer mechanism 5, and the like, based upon those information.

An embodiment which applies adhesive just prior to cutting of the interposer board has been described. Aside from this, it may be applicable that adhesive is applied to the interposer board in previous process, the adhesive is protected with a cover film and then the interposer board tape is reeled off, then the interposer board tape is wound off, the interposer board is cut off, and the interposer board is mounted on the carrier tape 2.

Fig. 8 is a schematic diagram illustrating an apparatus for manufacturing a final product using an electronic circuit board intermediate member of an example.

The apparatus sends a carrier tape 2 in a predetermined direction from a sending roller 100, changes the running direction of the carrier tape 2 in a turn-back manner at a predetermined location, then reels off only a base tape 21 and exfoliate layer 22 on a reel off roller 101.

Also, an antenna circuit board tape 110 is transferred by a feed roller 111, is then passed through a compression press 112, wherein an antenna circuit board is provided on the antenna circuit board tape 110, and wherein an interposer board 1 is to be mounted on the antenna circuit board.

When the compression press 112 is replaced with a heating compression press, adhesive can sufficiently filled within fine concave sections of extended electrodes even when the adhesive has poor flowability. Therefore, junction resistance can be decreased, and junction stability can be improved.

A transfer mechanism 120 is further provided for sucking and removing an interposer board 1 in vicinity of the turn-back section, and for transferring the removed interposer board 1 to an antenna circuit board.

When a final product is manufactured by employing the apparatus and using an electronic circuit board intermediate member having good interposer boards 1 only, it is sufficient that all interposer boards 1 are sequentially removed, and the removed interposer board 1 is heated and compressed towards the antenna circuit board (refer to Fig. 4). Therefore, checking whether the interposer board 1 is good or failure, and process, such as acceleration and deceleration in tape transfer, stopping operation, discharging of a failure interposer board, or discharging of a blank section, when a failure interposer board is detected, are unnecessary. As a result, arrangement for carrying out above series of process can be simplified, and overall required time can be shortened.

## Claims

1. An electronic circuit board intermediate member comprising;
a plurality of good interposer board (1); and
a carrier tape (2) formed an exfoliate layer (22) thereon, and
wherein the good interposer boards (1) are disposed on the carrier tape (2) at every predetermined interval, the good interposer board (1) comprising a base member (12) mounting an IC chip (11), extended electrodes (14) formed on the base member (12) and each connected to corresponding electrode (13) of the IC chip (11).

2. A manufacturing method for manufacturing an electronic circuit board intermediate member comprising;
a process for applying adhesive (15) on extended electrodes (14) of an interposer board tape (3), the interposer board tape (3) being obtained by forming the extended electrodes (14) on a base member (12), a plurality of IC chip (11) being mounted on the base member (12), and each of the extended electrodes (14) being connected to corresponding electrode (13) of each of the IC chip (11);
a process for obtaining individual interposer boards (1) by cutting the interposer board tape (3);
a process for selecting only good interposer boards (1); and
a process for disposing only the good interposer boards (1) on a carrier tape (2) at every predetermined interval, the carrier tape (2) being obtained by forming an exfoliate layer (22) on a base tape (21).

3. A manufacturing apparatus for manufacturing an electronic circuit board intermediate member comprising;
first means for applying adhesive (15) on extended electrodes (14) of an interposer board tape (3), the interposer board tape (3) being obtained by forming the extended electrodes (14) on a base member (12), a plurality of IC chip (11) being mounted on the base member (12), and each of the extended electrodes (14) being connected to corresponding electrode (13) of each of the IC chip (11);
second means for obtaining individual interposer boards (1) by cutting the interposer board tape (3);
third means for selecting only good interposer boards (1); and
fourth means for disposing only the good interposer boards (1) on a carrier tape (2) at every predetermined interval, the carrier tape (2) being obtained by forming an exfoliate layer (22) on one face of a base tape (21).

4. A manufacturing method for manufacturing non-contact ID card and the like comprising;
peeling an interposer board (1) from an electronic circuit board intermediate member, the electronic circuit board intermediate member being obtained by disposing interposer boards (1) on a carrier tape (2) at every predetermined interval, the interposer board (1) being obtained by mounting an IC chip (11), by forming extended electrodes (14) each connected to corresponding electrode (13) of the IC chip (11), and by forming an adhesive layer (15) to cover the extended electrodes (14), the carrier tape (2) being obtained by forming an exfoliate layer (22) on one face of a base tape (21); and
depressing the interposer board (1) to an antenna circuit board tape (3) so as to face antenna electrodes (32) formed on an antenna circuit base material film (31) and the extended electrodes (14).

5. A manufacturing apparatus for manufacturing non-contact ID card and the like comprising;
means for peeling an interposer board (1) one by one from an electronic circuit board intermediate member, the electronic circuit board intermediate member being obtained by disposing interposer boards (1) on a carrier tape (2) at every predetermined interval, the interposer board (1) being obtained by mounting an IC chip (11), by forming extended electrodes (14) each connected to corresponding electrode (13) of the IC chip (11), and by forming an adhesive layer (15) to cover the extended electrodes (14), the carrier tape (2) being obtained by forming an exfoliate layer (22) on one face of a base tape (21); and
means for depressing the interposer board (1) to an antenna circuit board tape (3) so as to face antenna electrodes (32) formed on an antenna circuit base material film (31) and the extended electrodes (14).
